# EUROPEAN PATENT SPECIFICATION

(11) **EP 4 517 251 B1**
(45) Date of publication and mention of the grant of the patent: **01.07.2026**
(21) Application number: 24809534.1
(22) Date of filing: 22.01.2024
(51) Int. Cl.: G01B 5/12, G01B 5/08

(54) **GROOVE DIAMETER MEASUREMENT METHOD AND GROOVE DIAMETER MEASUREMENT DEVICE FOR BEARING, MANUFACTURING METHOD FOR ROLLING BEARING, MACHINE, AND MANUFACTURING METHOD FOR VEHICLE**
RILLENDURCHMESSERMESSVERFAHREN UND RILLENDURCHMESSERMESSVORRICHTUNG FÜR LAGER, HERSTELLUNGSVERFAHREN FÜR WÄLZLAGER, MASCHINE UND HERSTELLUNGSVERFAHREN FÜR FAHRZEUG
PROCÉDÉ DE MESURE DE DIAMÈTRE DE RAINURE ET DISPOSITIF DE MESURE DE DIAMÈTRE DE RAINURE POUR PALIER, PROCÉDÉ DE FABRICATION DE PALIER À ROULEMENT, MACHINE ET PROCÉDÉ DE FABRICATION POUR VÉHICULE

(30) Priority: 29.05.2023 JP 2023088045
(43) Date of publication of application: 05.03.2025
(73) Proprietor: NSK Ltd., Tokyo 141-8560 (JP)
(72) Inventor: SUZUKI, Takahiro, Fujisawa-shi, Kanagawa 251-8501 (JP)
(74) Representative: Grünecker Patent- und Rechtsanwälte PartG mbB
(86) International application number: PCT/JP2024/001570
(87) International publication number: WO 2024/247355

(56) References cited:
- CN-A- 105 043 188
- JP-A- 2006 047 060
- JP-A- 2006 242 676
- JP-A- 2021 120 652

## Description

### TECHNICAL FIELD

The present invention relates to a bearing groove diameter measuring method and a bearing groove diameter measuring device, a manufacturing method for a rolling bearing, and manufacturing methods for a machine and a vehicle.

Priority is claimed on Japanese Patent Application No. 2023-088045, filed May 29, 2023.

### BACKGROUND ART

As one of production (assembly) processes for rolling bearings, there is a process in which a plurality of probes are brought into contact with a groove bottom of a bearing race (an outer ring, an inner ring, or a ring-shaped member) to measure a groove diameter dimension from displacement amounts of the probes. Conventionally, in measurement of this groove diameter, a groove diameter has been measured with a rotation axis of a bearing race disposed in a vertical direction (gravity direction) (see, for example, Patent Document 1). This is because, in equipment that horizontally conveys rolling bearings, bearing races can be measured in the same posture as they are conveyed to a groove diameter measurement position, making it easier to handle the bearing races during production of the rolling bearings. In this method, an axial center of the race is determined by a measuring force applied when the probe comes into contact with the bearing race.

Document JP 2006 047060 A describes a groove diameter measuring method in which a bearing ring is supported by three ball probes contacting the groove bottom, with a movable arm pivoted at its base and a sensor detecting displacement at an intermediate point of the arm to determine the groove diameter.

### Citation List

### Patent Document

Patent Document 1: Japanese Patent Application, Publication No. 2010-185836

### SUMMARY OF INVENTION

### Technical Problem

However, when a groove diameter of the bearing race is measured with a rotation axis disposed in a direction of gravity, since a weight of the bearing race acts in a direction in which the probe is deviated from the groove bottom, a measurement value of the groove diameter tends to be unstable. Therefore, in a configuration of Patent Document 1, a mechanism to cancel the weight of the bearing race is provided below the bearing race, thereby stabilizing the measurement value. However, even in that case, there is a likelihood that a friction state between the raceway surface and the probe may change depending on a measurement environment, and there has been a problem in that finding optimal conditions to stabilize the measurement value requires time and effort. Also, since an axial center of the bearing race is determined by the measuring force, a rubbing motion may occur between the probe and the raceway surface, which may lead to wear of the probe and a decrease in measurement accuracy.

An objective of the present invention is to provide a bearing groove diameter measuring method and a bearing groove diameter measuring device, a manufacturing method for a rolling bearing, and manufacturing methods for a machine and a vehicle capable of preventing a probe from deviating from a groove bottom of a raceway groove due to a weight of a bearing race, and improving a measurement accuracy of a groove diameter by suppressing wear of the probe.

### Solution to Problem

A bearing groove diameter measuring method according to one aspect of the present invention includes the method according to claim 1.

A manufacturing method for a rolling bearing according to one aspect of the present invention uses the measuring method described above.

A manufacturing method for a machine according to one aspect of the present invention uses the manufacturing method for a rolling bearing described above.

A manufacturing method for a vehicle according to one aspect of the present invention uses the manufacturing method for a rolling bearing described above.

A bearing groove diameter measuring device according to one aspect of the present invention includes a device according to claim 8.

### Advantageous Effects of Invention

According to the present invention, a probe can be prevented from deviating from a groove bottom of a raceway groove due to a weight of a bearing race, and a measurement accuracy of a groove diameter can be improved by suppressing wear of the probe.

### BRIEF DESCRIPTION OF DRAWINGS

[FIG. 1] FIG. 1 is an overall configuration view representing a groove diameter measuring device.
[FIG. 2] FIG. 2 is a schematic perspective view representing a gripping unit.
[FIG. 3] FIG. 3 is a cross-sectional view of a bearing race and the gripping unit illustrated in FIG. 2 along line III-III.
[FIG. 4] FIG. 4 is a flowchart showing a procedure of a groove diameter measuring method.
[FIG. 5A] FIG. 5A is a process explanatory view illustrating a process of disposing the bearing race on a conveyance path at a measurement position.
[FIG. 5B] FIG. 5B is a process explanatory view illustrating the process of disposing the bearing race on the conveyance path at the measurement position.
[FIG. 5C] FIG. 5C is a process explanatory view illustrating the process of disposing the bearing race on the conveyance path at the measurement position.
[FIG. 6A] FIG. 6A is an explanatory view in a partial cross section illustrating a state in which the bearing race gripped by the gripping unit is transferred to the measurement position.
[FIG. 6B] FIG. 6B is a schematic side view of FIG. 6A from a V direction.
[FIG. 7A] FIG. 7A is an explanatory view in a partial cross section illustrating a state in which the grip of the gripping unit is released.
[FIG. 7B] FIG. 7B is a schematic side view of FIG. 7A from the V direction.
[FIG. 8A] FIG. 8A is a schematic cross-sectional view illustrating a state in which a movable probe is in contact with a raceway groove of the bearing race.
[FIG. 8B] FIG. 8B is a schematic side view of FIG. 8A from the direction of arrow V.
[FIG. 9] FIG. 9 is a configuration view representing a main part of a groove diameter measuring device.
[FIG. 10] FIG. 10 is a schematic perspective view representing the gripping unit.
[FIG. 11] FIG. 11 is a cross-sectional view of the bearing race and the gripping unit illustrated in FIG. 10 along line XI-XI.
[FIG. 12] FIG. 12 is a schematic side view of the movable probe and a pair of probes from an axial direction of the bearing race.
[FIG. 13A] FIG. 13A is an explanatory view in a partial cross section illustrating a state in which the bearing race gripped by the gripping unit is transferred to the measurement position.
[FIG. 13B] FIG. 13B is a schematic side view of FIG. 13A from the V direction.
[FIG. 14A] FIG. 14A is an explanatory view in a partial cross section illustrating a state in which the raceway groove of the bearing race is in contact with the probe.
[FIG. 14B] FIG. 14B is a schematic side view of FIG. 14A from the V direction.
[FIG. 15A] FIG. 15A is a schematic cross-sectional view illustrating a state in which the movable probe is in contact with the raceway groove of the bearing race.
[FIG. 15B] FIG. 15B is a schematic side view of FIG. 15A from the direction of arrow V.
[FIG. 16A] FIG. 16A is a schematic cross-sectional view illustrating a state in which the grip of the bearing race by the gripping unit is released.
[FIG. 16B] FIG. 16B is a schematic side view of FIG. 16A from the direction of arrow V.
[FIG. 17] FIG. 17 is a partial cross-sectional perspective view of a rolling bearing.
[FIG. 18] FIG. 18 is a schematic cross-sectional view of a motor in which a rotating shaft is supported by the rolling bearing.

### DESCRIPTION OF EMBODIMENTS

Hereinafter, an embodiment of the present invention will be described in detail with reference to the drawings. A bearing groove diameter measuring method (bearing race groove diameter measuring method, ring-shaped member groove diameter measuring method) described herein is suitably used in, for example, a manufacturing process of a rolling bearing.

### <First embodiment>

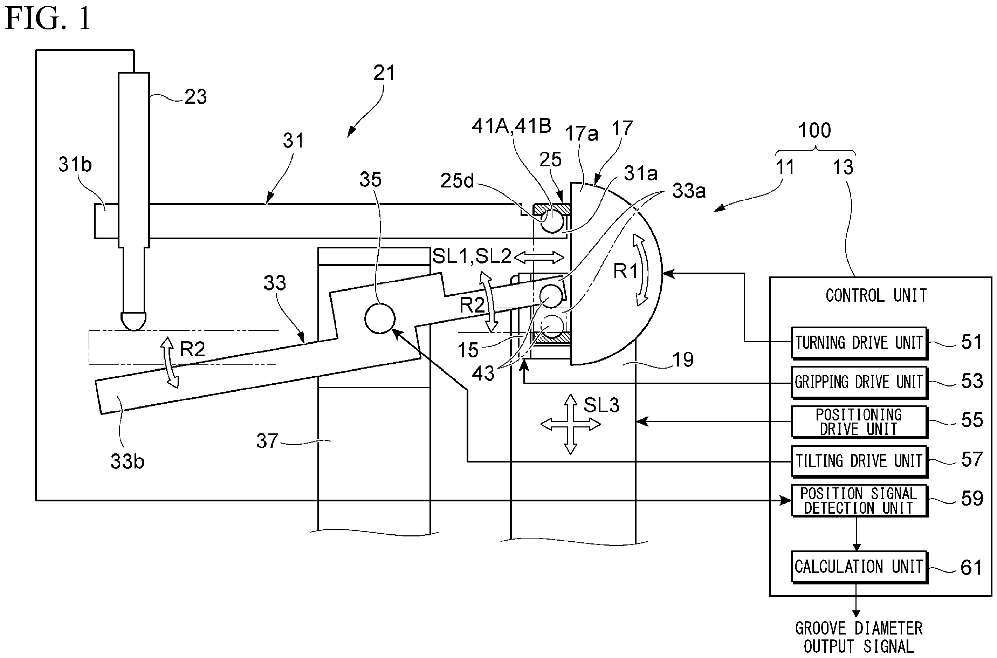

FIG. 1 is an overall configuration view of a groove diameter measuring device 100. The measuring device (hereinafter also referred to as a groove diameter measuring device) 100 includes a measuring unit 11 and a control unit 13. The measuring unit 11 includes a gripping unit 15, a turning unit 17, a transfer unit 19, an operation mechanism 21, and a position sensor 23. In the present embodiment, the bearing race (ring-shaped member) is an outer ring 25 of the rolling bearing. In the following description, common members and parts will be denoted by the same reference signs, and description thereof will be simplified or omitted.

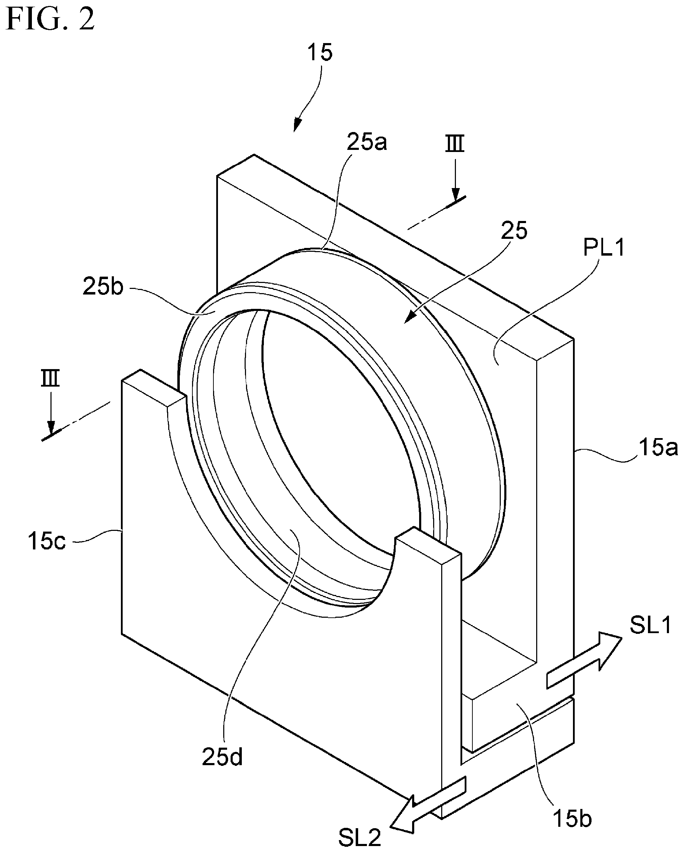

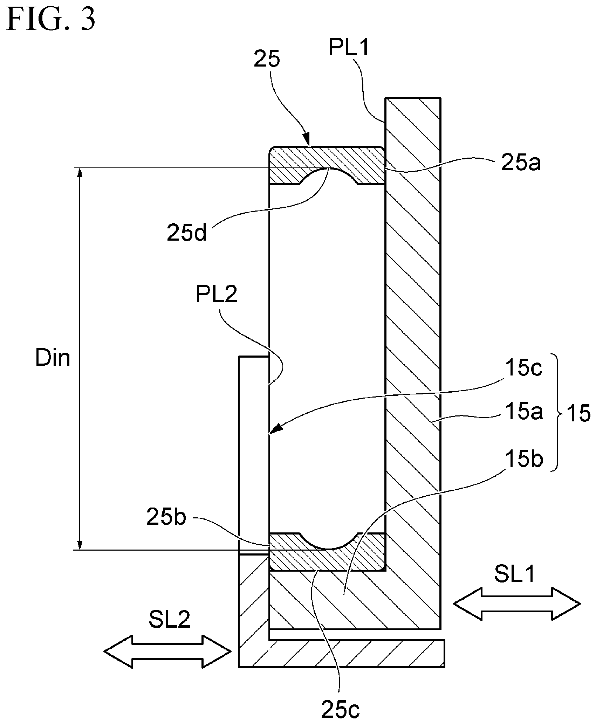

FIG. 2 is a schematic perspective view of the gripping unit 15 in which the outer ring 25 is gripped. FIG. 3 is a cross-sectional view of the outer ring 25 and the gripping unit 15 illustrated in FIG. 2 along line III-III. The gripping unit 15 includes a first support portion 15a, an abutment portion 15b, and a second support portion 15c.

The first support portion 15a has a flat surface PL1 (see FIG. 3) that comes into contact with one end surface 25a of the outer ring 25. The abutment portion 15b is formed integrally with the first support portion 15a and protrudes perpendicularly from the flat surface PL1 of the first support portion 15a to abut against an outer circumferential surface 25c of the outer ring 25. The second support portion 15c is disposed to face the first support portion 15a and has a flat surface PL2 that comes into contact with the other end surface 25b of the outer ring 25. The first support portion 15a and the abutment portion 15b, and the second support portion 15c are configured to be displaceable in directions of arrows SL1 and SL2, respectively, by a drive mechanism (not illustrated). Thereby, gripping and releasing of the outer ring 25 can be performed by moving the flat surface PL1 of the first support portion 15a and the flat surface PL2 of the second support portion 15c closer to or farther away from each other.

As illustrated in FIG. 1, the turning unit 17 includes a turning table 17a that is driven to turn. The gripping unit 15 is supported on the turning table 17a via, for example, a linear guide (linear-motion guide mechanism). When the turning table 17a of the turning unit 17 is operated to turn in a direction of arrow R1, an axial direction of the outer ring 25 gripped by the gripping unit 15 is changed to an arbitrary direction between a direction of gravity (vertical direction, longitudinal direction) and a horizontal direction (lateral direction).

The turning unit 17 supporting the gripping unit 15 is mounted on the transfer unit 19. The transfer unit 19 includes a drive source (not illustrated) and is capable of moving the gripping unit 15 and the turning unit 17 in any direction (direction of arrow SL3) of three orthogonal axial directions. Also, the transfer unit 19 may also have a function of moving in a rotational direction around each of the three orthogonal axes described above. The transfer unit 19 configured as described above transfers the outer ring 25 to a specified measurement position in the measuring unit 11. Further, the outer ring 25 can be positioned with high accuracy using a servo motor, that allows for control over small distances, as a drive source of the transfer unit 19.

A configuration of the operation mechanism 21 differs depending on whether the bearing race (ring-shaped member) to be measured is an outer ring or an inner ring. In the present embodiment, the bearing race (ring-shaped member) is the outer ring 25, and the operation mechanism 21 includes an upper arm (support member) 31, a lower arm 33, and a rotation support portion 35. The upper arm 31 is fixed to a support (not illustrated). The rotation support portion 35 is configured to include an electric actuator such as a motor mounted on a support base 37. The rotation support portion 35 rotatably supports a longitudinal intermediate portion of the lower arm 33, and enables the lower arm 33 to perform a tilting motion in a direction of arrow R2. Thereby, one end part 33a of the lower arm 33 is movable in a vertical direction.

The upper arm (support member) 31 is formed of an elongated member. One end part 31a of the upper arm 31 in a longitudinal direction is disposed in an upper region of a region that is on a radially inward side of an inner circumferential surface of the outer ring 25 gripped by the gripping unit 15 at the measurement position. A pair of probes (fixed-side probes, supports, contact portions, convex portions) 41A and 41B that come into contact with a groove bottom of a raceway groove 25d on an upper side of the outer ring 25 are provided at one end part 31a of the upper arm 31. The upper arm 31 has two probes 41A and 41B each having an upwardly convex contour. The two probes 41A and 41B are disposed apart from each other in a horizontal direction. Two vertices of the probes 41A and 41B are disposed on the same horizontal straight line. The probes 41A and 41B each have a convex surface. The convex surface can have a spherical and/or curved surface. A top surface of the probe 41A has a first curvature. A top surface of the probe 41B has a second curvature. The first curvature and the second curvature are respectively included in two vertical planes with respect to one horizontal straight line. In one example, the raceway groove 25d of the outer ring 25 has a concave outline. When a radius of curvature of a groove shape (groove curvature) of the raceway groove 25d is R1 and a radius of curvature of the top surfaces of the probes 41A and 41B is R2, R1/R2 can be set to approximately 1.0, 1.1, 1.2, 1.3, 1.4, 1.5, 1.6, 1.7, 1.8, 1.9, 2.0, 2.1, 2.2, 2.3, 2.4, or 2.5 or more. For example, R1/R2 is set to 1.0 or more and 1.8 or less. The above-described numerical values are merely examples and are not limited thereto. When the outer ring 25 (ring-shaped member) is supported on the two probes 41A and 41B by appropriately setting the convex shape, a position and a posture of the outer ring 25 is appropriately adjusted. The same applies to the inner ring to be described later. The position sensor 23 is fixed to another end part 31b of the upper arm 31 on a side opposite to the one end part 31a. The position sensor 23 may be a displacement sensor, and a contact type or non-contact type sensor can be used. As the position sensor 23, various types of sensors such as, for example, an eddy current type, an optical type, an electrical resistance type, an ultrasonic type, a laser type, and the like can be used. Further, the position sensor 23 is not limited to being fixed to the upper arm 31, but may also be fixed to another member.

The lower arm 33 is formed of an elongated member. One end part 33a of the lower arm 33 in a longitudinal direction is disposed below the one end part 31a of the upper arm 31, that is, in a lower region than a region that is on a radially inward side of the inner circumferential surface of the outer ring 25 gripped by the gripping unit 15 at the measurement position. A movable probe (movable-side probe) 43 that comes into contact with a groove bottom of the raceway groove 25d on a lower side (lowermost portion) of the outer ring 25 is provided at one end part 33a of the lower arm 33. The movable probe 43 comes into contact with a groove bottom surface of the raceway groove 25d at a lowermost portion. A height position of the another end part 33b of the lower arm 33 on a side opposite to the one end part 33a is detected by the position sensor 23 provided on the upper arm 31. A distance from the height detection position by the position sensor 23 of the lower arm 33 to a rotation center position (rotation support portion 35) of the lower arm 33 is known, and a distance from the rotation center position to the movable probe 43 is also known. Therefore, a height position at which the movable probe 43 comes into contact with the raceway groove 25d can be calculated by a geometric calculation from a height detection value of the another end part 33b from the position sensor 23. Further, the detection of the height position described above can be simplified and may also be performed by determining a difference from a predetermined reference height. In one example, the two probes 41A and 41B have convex surfaces of the same shape and are disposed at the same height position. The movable probe 43 has a convex surface disposed at a different height position from the probes 41A and 41B. The convex surface (a top surface of the convex surface, a vertex of the convex surface, a center of curvature of the convex surface) of the movable probe 43 is disposed on a vertical line passing through an intermediate position between the two probes 41A and 41B. For example, the two convex surfaces of the probes 41A and 41B each include a top surface having a curved outline that is a part of a circle with respect to a predetermined center position, and center positions of the two circles are at the same height position. The convex surface of the movable probe 43 includes a top surface having a curved outline that is a part of a circle with respect to a predetermined center position. The center position of the circle for the convex surface of the movable probe 43 is disposed on a vertical line passing through a horizontal midpoint of the center positions of the two circles for the convex surfaces of the probes 41A and 41B. A groove diameter of the raceway groove 25d is calculated based on a measurement result of the height position of the movable probe 43 from the position sensor 23. The same applies to the inner ring to be described later. In one example, a distance from the height detection position by the position sensor 23 of the lower arm 33 to the rotation center position (rotation support portion 35) of the lower arm 33 is set to be smaller, equal to, or larger than the distance from the rotation center position thereof to the movable probe 43. Based on the ratio of the distances, the value of the height position of the movable probe 43 can be enlarged or reduced and measured by the position sensor 23. The same applies to the inner ring to be described later.

In one example, it is preferable that each of the probes 41A and 41B and the movable probe 43 described above be a spherical body having the same or substantially the same size as that of rolling elements (balls) used in the outer ring 25 to be measured, or a spherical body having a radius of curvature smaller than a radius of curvature of the raceway groove 25d. Also, the probes 41A and 41B and the movable probe 43 are not limited to being spherical, and may be formed so that a part of the surface thereof has a spherical surface that constitutes a spherical body of the above-described size. Since the surfaces of the probes 41A and 41B and the movable probe 43 are spherical, they are positioned in point contact with the raceway groove 25d, and thereby a measurement accuracy can be improved.

The control unit 13 includes a turning drive unit 51, a gripping drive unit 53, a positioning drive unit 55, a tilting drive unit 57, a position signal detection unit 59, and a calculation unit 61, and drives each of the above-described units to calculate a groove diameter of the raceway groove 25d of the outer ring 25 from information on the detection signal from the position sensor 23, and the like. The groove diameter in this case is a diameter Din between deepest points of the raceway groove 25d as illustrated in FIG. 3. Then, the control unit 13 outputs information on the obtained groove diameter.

The gripping drive unit 53 drives the first support portion 15a of the gripping unit 15 illustrated in FIGS. 2 and 3 in the SL1 direction, drives the second support portion 15c in the SL2 direction, and outputs drive signals to perform gripping and releasing of the outer ring 25.

The turning drive unit 51 outputs a drive signal for turning the turning table 17a of the turning unit 17 illustrated in FIG. 1 in the R1 direction. The positioning drive unit 55 outputs a drive signal for transferring the transfer unit 19 in the SL3 direction between a retracted position and the measurement position. The tilting drive unit 57 outputs a drive signal for tilting the lower arm 33 in the R2 direction to the rotation support portion 35. The position signal detection unit 59 outputs a position detection signal output from the position sensor 23 to the calculation unit 61 at a predetermined timing.

The calculation unit 61 determines the groove diameter of the raceway groove 25d of the outer ring 25 by a calculation based on the position information of the movable probe 43 determined by a geometric calculation from the detection signal from the position signal detection unit 59 and the known position information of the probes 41A and 41B, and outputs the information on the determined groove diameter as a groove diameter output signal. Further, as will be described in detail later, the calculation unit 61 may simply determine the groove diameter by a proportional calculation that compares the measured position information with a predetermined reference value.

In this way, the position signal detection unit 59 and the calculation unit 61 of the control unit 13 and the position sensor 23 function as a position measuring unit that measures a contact position between the movable probe 39 and the raceway groove 25d.

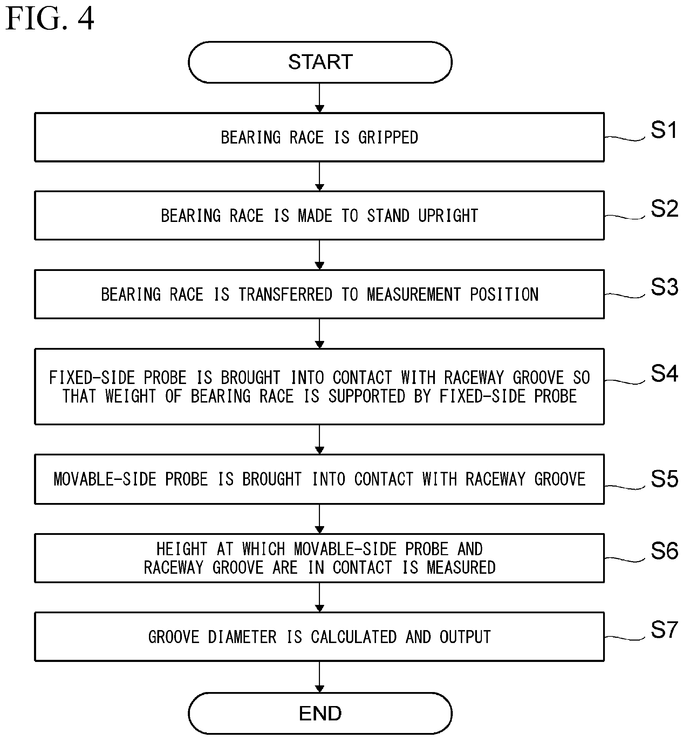

Next, a specific procedure for a groove diameter measuring method using the groove diameter measuring device 100 having the above-described configuration will be described in detail. FIG. 4 is a flowchart showing a procedure of the groove diameter measuring method. Here, description will be made assuming a case in which a groove diameter of the outer ring being conveyed on a conveyance path is measured in a part of the manufacturing process for rolling bearings, but the present invention is not limited thereto, and the groove diameter measurement may be performed at any timing.

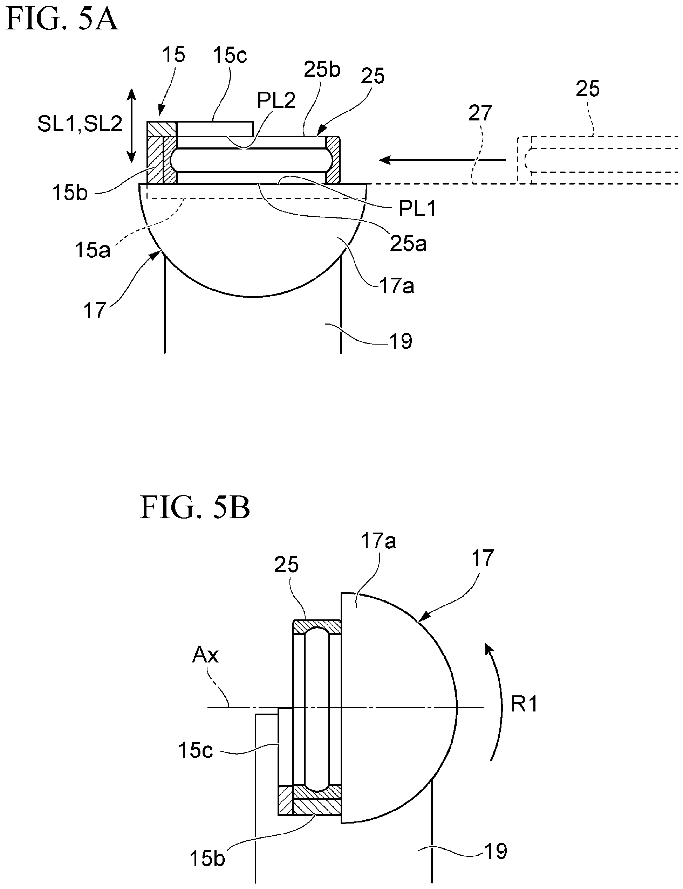

Hereinafter, description will also be made while also referring to FIG. 1 as appropriate. First, the outer ring 25 being conveyed on the conveyance path is gripped by the gripping unit 15 (S1). FIGS. 5A to 5C are process explanatory views illustrating processes up to disposing the outer ring 25 on a conveyance path 27 at the measurement position. As illustrated in FIG. 5A, the outer ring 25 indicated by the broken line on the conveyance path 27 is oriented so that an end surface thereof is in a vertical direction (direction of gravity).

The turning drive unit 51 of the control unit 13 shown in FIG. 1 rotates the turning table 17a of the turning unit 17 illustrated in FIG. 5A so that the flat surface PL1 of the first support portion 15a and the flat surface PL2 of the second support portion 15c of the gripping unit 15 are each positioned horizontally. Also, the gripping drive unit 53 adjusts positions of the first support portion 15a and the second support portion 15c so that the flat surface PL1 is at the same height position as the conveyance path 27 and so that a distance between the flat surfaces PL1 and PL2 is larger than a width of the outer ring 25.

Then, the outer ring 25 is transferred from the conveyance path 27 onto the flat surface PL1 of the gripping unit 15, and the outer circumferential surface 25c abuts against the abutment portion 15b. Then, the gripping drive unit 53 drives the first support portion 15a and the second support portion 15c to sandwich the outer ring 25 between the flat surfaces PL1 and PL2. Thereby, the outer ring 25 is gripped by the gripping unit 15.

Next, as illustrated in FIG. 5B, the turning drive unit 51 (FIG. 1) turns the turning table 17a by 90° to orient an axial direction Ax of the outer ring 25 in the horizontal direction. That is, the outer ring 25 is made to stand upright in the direction of gravity (S2).

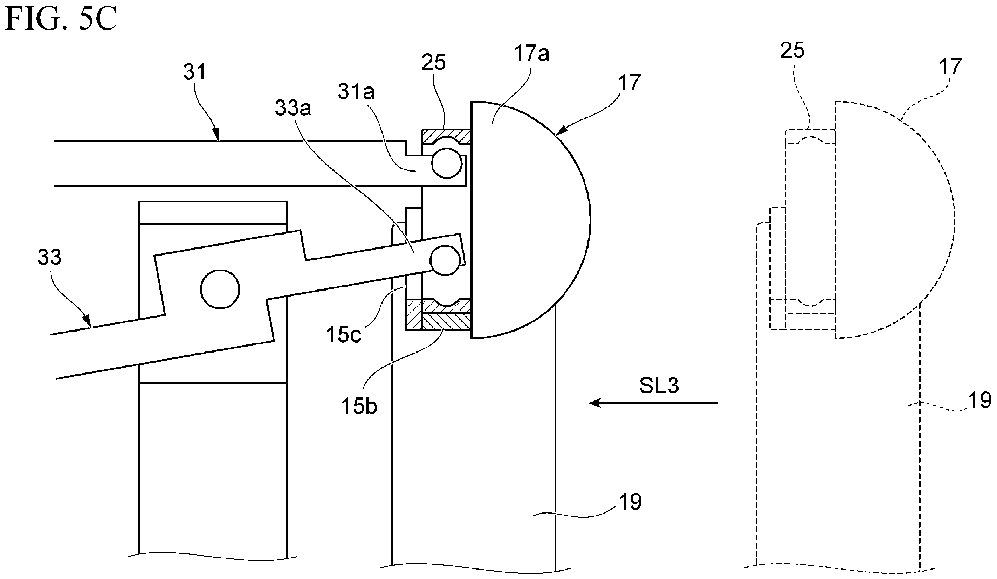

Then, as illustrated in FIG. 5C, the positioning drive unit 55 (FIG. 1) drives the transfer unit 19 to transfer the outer ring 25 to a specified measurement position (S3). In this transfer operation, the outer ring 25 can be positioned at the specified measurement position with higher accuracy by using a servo motor as the drive source of the transfer unit 19.

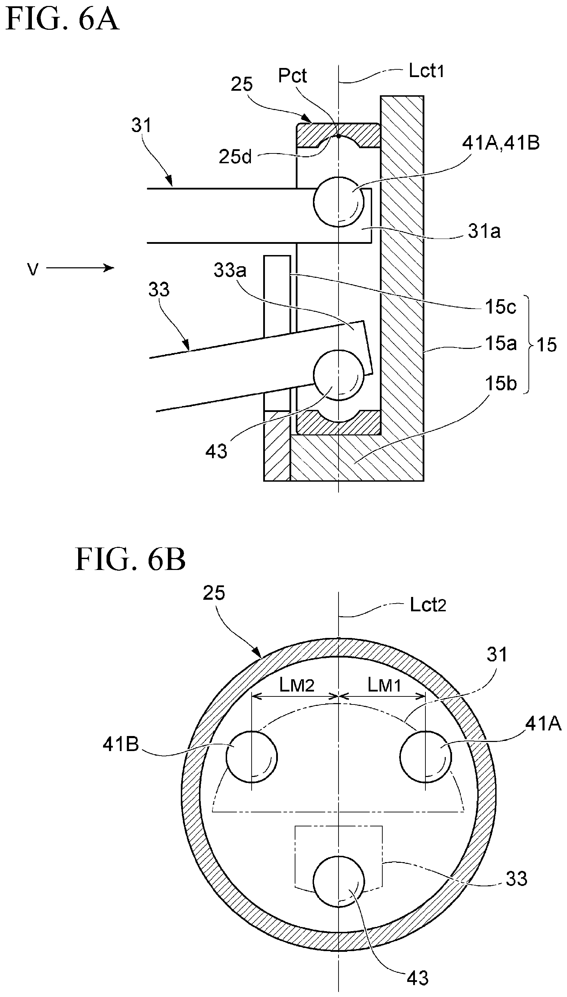

FIG. 6A is an explanatory view in a partial cross section illustrating a state in which the outer ring 25 gripped by the gripping unit 15 is transferred to the measurement position. FIG. 6B is a schematic side view of FIG. 6A from a V direction. As illustrated in FIG. 6B, the pair of probes 41A and 41B are disposed at the same height position, and are disposed at equal distances (L_{M1} = L_{M2}) from a vertical line L_{ct2} passing through a lower vertex (lowermost position) of the movable probe 43 in a side view of FIG. 6B.

Here, the above-described specified measurement position for disposing the outer ring 25 is, in terms of a width direction of the outer ring 25, a position at which a vertical line L_{ct1} passing through upper vertices (uppermost points) of spherical surfaces of the probes 41A and 41B aligns with a midpoint P_{ct} in a width direction of the raceway groove 25d of the outer ring 25 as illustrated in FIG. 6A. Also, in terms of a horizontal direction as viewed from the axial direction of the outer ring 25, as illustrated in FIG. 6B, a position at which the vertical line L_{ct2} described above passes through a midpoint in a horizontal direction in a side view of the outer ring 25 is the specified measurement position. In one example, a positional accuracy for positioning the outer ring 25 at the measurement position is preferably such that an amount of deviation of the vertical line L_{ct1} from the groove bottom in the width direction is 0.1 mm or less. On the other hand, a positional accuracy in the horizontal direction as viewed from the axial direction may be lower than the positional accuracy in the width direction. This is because, when the pair of probes 41A and 41B come into contact with the raceway groove 25d, the outer ring 25 automatically moves to an intermediate position between the pair of probes 41A and 41B due to gravity. The numerical value described above is merely an example, and the present invention is not limited thereto.

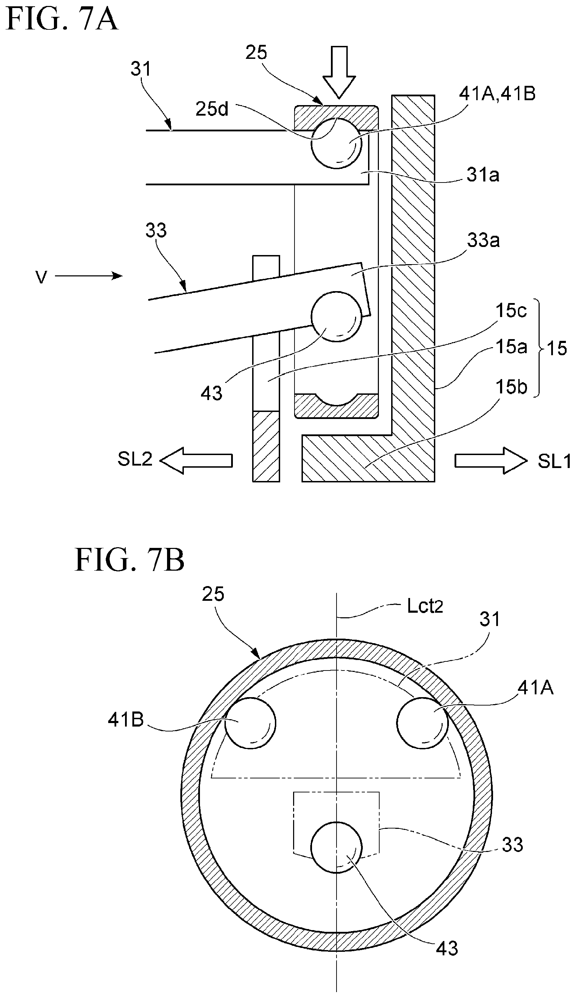

Next, when the transfer of the outer ring 25 to the measurement position is completed, the gripping drive unit 53 releases the grip of the outer ring 25 by the gripping unit 15. FIG. 7A is an explanatory view in a partial cross section illustrating a state in which the grip of the gripping unit 15 is released. FIG. 7B is a schematic side view of FIG. 7A from the V direction. As illustrated in FIG. 7A, the positioning drive unit 55 (FIG. 1) drives the transfer unit 19 to move the outer ring 25 gripped by the gripping unit 15 to a position at which the raceway groove 25d comes into contact with the probes 41A and 41B with high accuracy. Then, after the probes 41A and 41B are engaged with the raceway groove 25d, the gripping drive unit 53 (FIG. 1) moves the first support portion 15a of the gripping unit 15 in the direction of arrow SL1 and moves the second support portion 15c in the direction of t arrow SL2, thereby releasing the grip of the outer ring 25. Then, the outer ring 25 is supported by the probes 41A and 41B provided in the upper arm (support member) 31. In this way, the outer ring 25 can be positioned at the measurement position with high accuracy while standing upright by positioning the outer ring 25 at the measurement position and then releasing the grip using the transfer unit 19. In this manner, it becomes a state in which a weight of the outer ring 25 is supported by the pair of probes 41A and 41B (S4). A central axis of the outer ring 25 is disposed horizontally, and the probes 41A and 42B of the upper arm (support member) come into contact with the groove bottom surface of the raceway groove 25d to support a weight of the outer ring 25.

At this time, a center position of the outer ring 25 automatically aligns with the vertical line L_{CT2} by the pair of probes 41A and 41B as illustrated in FIG. 7B. Further, since the lower arm 33 illustrated in FIG. 1 is in a state of being tilted counterclockwise with the rotation support portion 35 as a center, the movable probe 43 is separated from the raceway groove 25d of the outer ring 25.

Next, the tilting drive unit 57 (FIG. 1) drives the rotation support portion 35 to tilt the lower arm 33 clockwise with the rotation support portion 35 as a center and bring the movable probe 43 into contact with the raceway groove 25d of the outer ring 25 (S5).

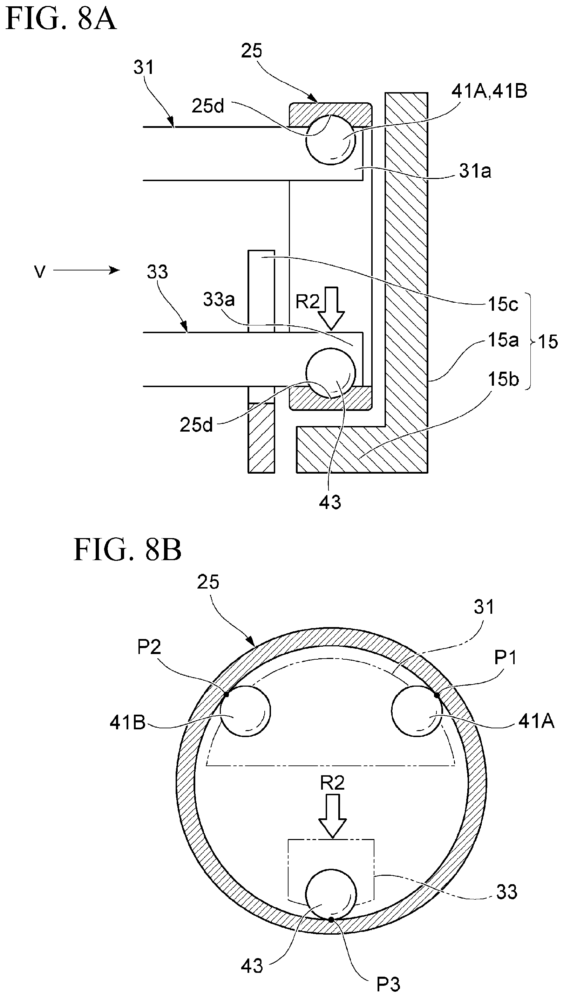

FIG. 8A is a schematic cross-sectional view illustrating a state in which the movable probe 43 is in contact with the raceway groove 25d of the outer ring 25. FIG. 8B is a schematic side view of FIG. 8A from the direction of arrow V. As illustrated in FIGS. 8A and 8B, when the movable probe 43 comes into contact with the raceway groove 25d of the outer ring 25, the outer ring 25 is supported at three points by the pair of probes 41A and 41B and the movable probe 43, and a position and posture thereof are restricted. In the vertical direction, the central axis of the outer ring 25 is disposed between a contact position between the lower arm (support member) 33 and the groove bottom surface of the raceway groove 25d and a contact position between the movable probe 43 and the groove bottom surface of the raceway groove 25d.

In this state, the position signal detection unit 59 (FIG. 1) detects a height of the another end part 33b of the lower arm 33 based on the detection signal output from the position sensor 23. The height position of the movable probe 43 is measured in a state in which the movable probe 43 placed on the groove bottom surface of the outer ring 25. This detected height information is sent to the calculation unit 61. The calculation unit 61 converts the height information into information on the height position at which the movable probe 43 comes into contact with the raceway groove 25d (S6). That is, the calculation unit 61 determines a height of the contact position between the movable probe 43 and the raceway groove 25d by a geometric calculation based on a positional relationship between a contact point (position measurement point) between the position sensor 23, whose position is known, and the another end part 33b of the lower arm 33, a contact point between the movable probe 43 at one end part 33a of the lower arm 33 and the raceway groove 25d, and a rotation center of the rotation support portion 35.

Then, the calculation unit 61 calculates the groove diameter of the raceway groove 25d of the outer ring 25 from height information at contact points P1 and P2 of the pair of probes 41A and 41B disposed at the specified positions illustrated in FIG. 8B with the raceway groove 25d, and height information of a contact point P3 between the movable probe 43 and the raceway groove 25d determined by the calculation from the detection signal of the position sensor 23. Then, the calculation unit 61 outputs the information on the calculated groove diameter (S7). The height position of the contact point P3 and the groove diameter of the raceway groove 25d described above can be obtained by a well-known geometric calculation. Based on the measurement result of the height position of the movable probe 43, the groove diameter of the raceway groove 25d is calculated.

Further, when the groove diameter is determined in a simplified manner, the calculation unit 61 acquires the output signal from the position sensor 23 as the position information of the movable probe 43, and compares the acquired position information of the movable probe 43 with a predetermined reference to determine the groove diameter.

In the groove diameter measuring method described above, the groove diameter is measured while the outer ring 25, which is gripped by the gripping unit 15, is changed to rotate 90° by the turning unit 17 from a state in which the rotation axis of the outer ring 25 faces the direction of gravity to a state in which it faces a horizontal direction, that is, with the outer ring 25 standing upright in the direction of gravity. According to this, since the outer ring 25 engaged with the probes 41A and 41B naturally settles to the groove bottom of the raceway groove 25d due to its own weight, fluctuations in contact positions between the probes 41A and 41B and the movable probe 43, and the raceway groove 25d are less likely to occur, and an accuracy of the groove diameter measurement can be improved. Also, a high-precision actuator such as a servo motor is used to convey the outer ring 25 to the measurement position, and thereby the probes 41A and 41B and the movable probe 43 can be accurately disposed at positions in which they are in contact with the groove bottom of the raceway groove 25d of the outer ring 25.

When an amount of axial deviation between the probes 41A and 41B and the movable probe 43, and the groove bottom of the raceway groove 25d at this time is kept to 0.1 mm or less, a rubbing motion between each of the probes and the raceway groove 25d can be reduced, and wear on the probes can be suppressed. As a result, a service life of each probe, which allows for stable measurement of the groove diameter, can be improved. Also, a measuring force required to guide each probe to the groove bottom (a force to open the probes 41A and 41B and the movable probe 43 in a radial direction of the outer ring 25) can be reduced, which also contributes to reducing wear on each probe.

### <Second embodiment>

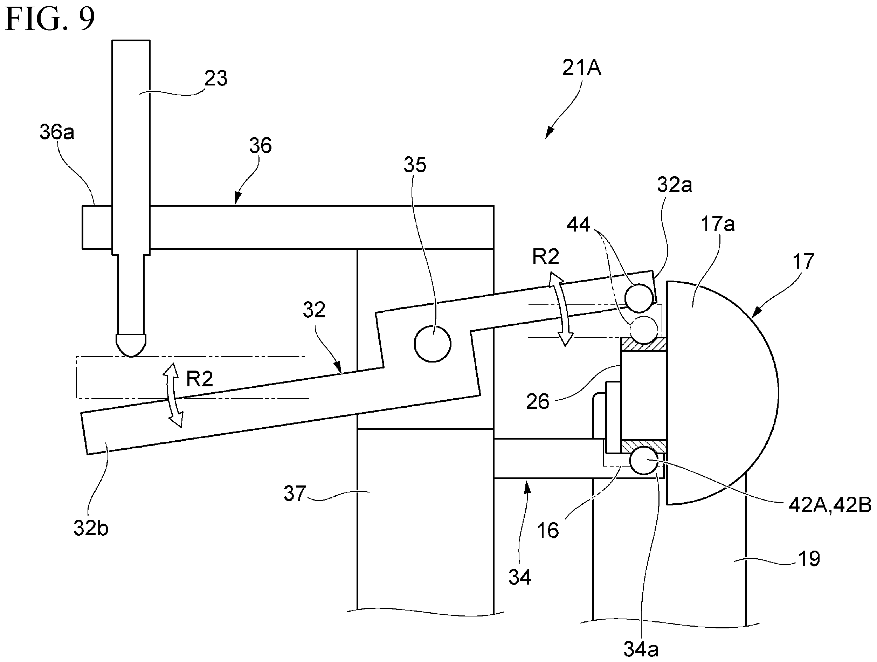

FIG. 9 is a configuration view of a main part of a groove diameter measuring device 200. In the present embodiment, a bearing race (ring-shaped member) is an inner ring 26 of a rolling bearing. The groove diameter measuring device 200 has the same configuration as the groove diameter measuring device 100 described above, except that configurations of a gripping unit 16, an upper arm 32, and a lower arm 34 have been changed and a sensor support arm 36 has been provided for inner ring measurement. That is, in an operation mechanism 21A of the groove diameter measuring device 200 of the present configuration, the sensor support arm 36 supporting a position sensor 23, and the lower arm 34 are each fixed to a support base 37, and the upper arm 32 is supported by the support base 37 to be tiltable.

Specifically, one end part 32a of the upper arm 32 in a longitudinal direction is disposed above an uppermost portion of an outer circumferential surface of the inner ring 26 gripped by the gripping unit 16 at a measurement position, and a movable probe 44 configured to come into contact with a groove bottom of a raceway groove 26d is provided on the one end part 32a. One end part 34a of the lower arm 34 in a longitudinal direction is disposed below a lowermost portion of the outer circumferential surface of the inner ring 26 gripped by the gripping unit 16 at the measurement position, and a pair of probes 42A and 42B configured to come into contact with a groove bottom of the raceway groove 26d is provided on the one end part 34a. The sensor support arm 36 has a base end part fixed to the support base 37, and the position sensor 23 is provided at one end part 36a of the distal end which extends along the upper arm 32.

The upper arm 32 is capable of tilting motion in a direction of arrow R2 due to a longitudinal intermediate portion thereof supported by a rotating shaft of a rotation support portion 35. Thereby, one end part 32a of the upper arm 32 is movable in a vertical direction. A height position of the another end part 32b of the upper arm 32 in the longitudinal direction is detected by the position sensor 23 provided at the one end part 36a of the sensor support arm 36.

A distance from the height detection position by the position sensor 23 of the upper arm 32 to a rotation center position (rotation support portion 35) of the upper arm 32, and a distance from the rotation center position of the upper arm 32 to the movable probe 44 are known. Therefore, also in this case, a height position at which the movable probe 44 comes into contact with the raceway groove 26d can be calculated by a geometric calculation based on a height detection value of the another end part 32b.

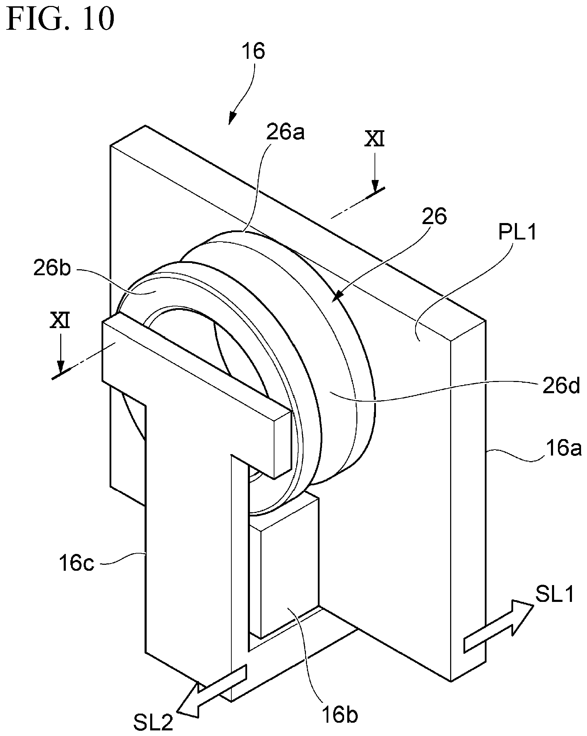

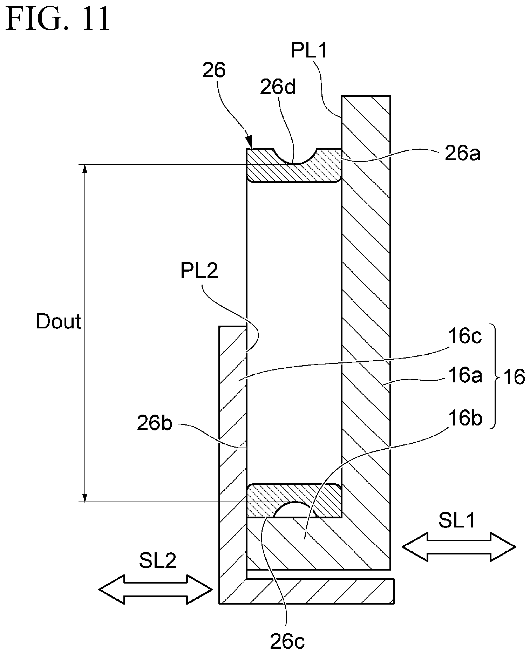

FIG. 10 is a schematic perspective view of the gripping unit 16 in which the inner ring 26 is gripped. FIG. 11 is a cross-sectional view of the inner ring 26 and the gripping unit 16 illustrated in FIG. 10 along line XI-XI. As illustrated in FIG. 11, the groove diameter in this case is a diameter Dout between deepest points of the raceway groove 26d. The gripping unit 16 has a first support portion 16a, an abutment portion 16b, and a second support portion 16c.

The first support portion 16a has a flat surface PL1 (see FIG. 11) that comes into contact with one end surface 26a of the inner ring 26 and a part of the outer circumferential surface. The abutment portion 16b is formed integrally with the first support portion 16a, protrudes perpendicularly from the flat surface PL1 of the first support portion 16a to abut against an outer circumferential surface 26c of the inner ring 26. The second support portion 16c is disposed to face the first support portion 16a and has a flat surface PL2 that comes into contact with the other end surface 26b of the inner ring 26. The first support portion 16a and the abutment portion 16b, and the second support portion 16c are configured to be displaceable in directions of arrows SL1 and SL2, respectively, by a drive mechanism (not illustrated), and gripping and releasing of the inner ring 26 can be performed by moving the flat surface PL1 of the first support portion 16a and the flat surface PL2 of the second support portion 16c closer to or farther away from each other.

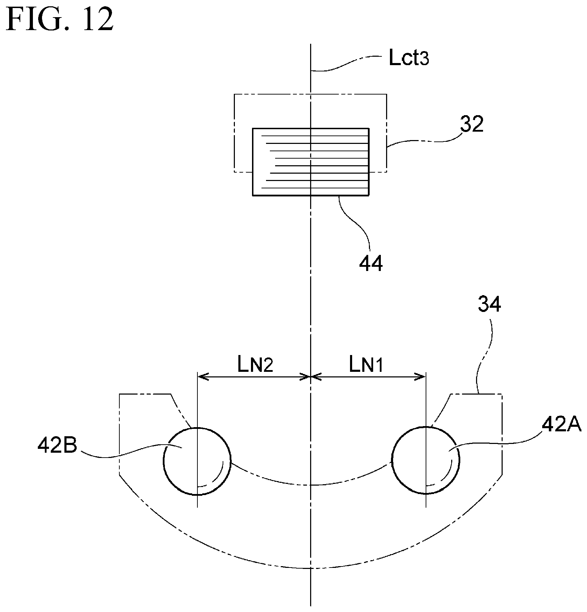

FIG. 12 is a schematic side view of the movable probe 44 and the pair of probes 42A and 42B from an axial direction of the bearing race. The movable probe 44 of the present configuration is formed of a columnar roller. According to this, when the movable probe 44 is brought into contact with the raceway groove 26d of the inner ring 26, whose rotation axis is made to stand upright in a horizontal direction, from above, the movable probe 44 comes into line contact with the raceway groove 26d of the inner ring 26. Thereby, even if the inner ring 26 deviates in position from a specified measurement position, a contact state can be maintained stably, and a measurement accuracy of the groove diameter can be improved. Further, the movable probe 44 is not limited to a roller, and may have an outer surface that is partially columnar, or may be a ball. The pair of probes 42A and 42B are disposed at the same height position, and are disposed at equal distances (L_{N1} = L_{N2}) from a vertical line L_{ct3} passing through an axial center of a lowermost position of the columnar shape of the movable probe 44 in a side view of FIG. 12.

Next, a specific procedure for a groove diameter measuring method using the groove diameter measuring device 200 having the above-described configuration will be described with reference to the flowchart illustrated in FIG. 4 described above. Steps from gripping the inner ring 26 (S1), making it stand upright (S2), and transferring it to the measurement position (S3) are the same as those in the first configuration example described above.

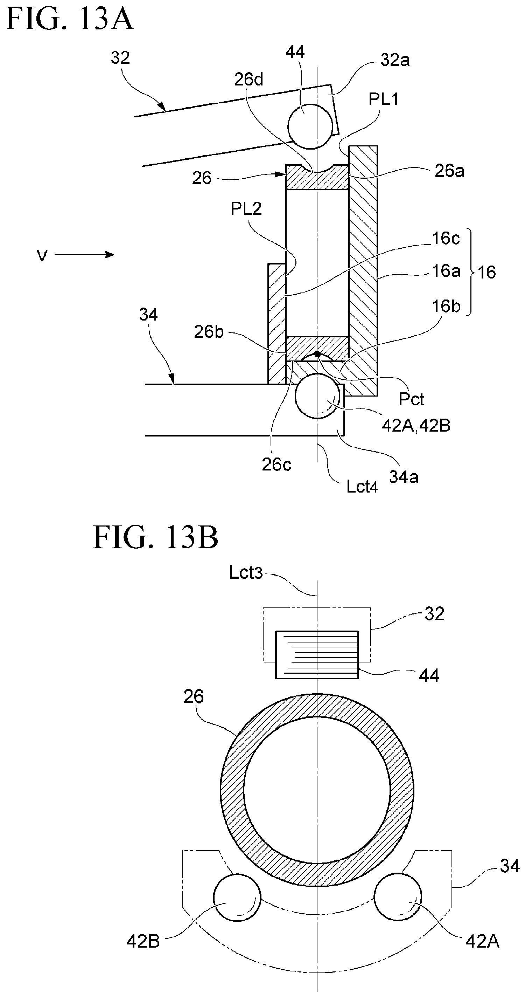

FIG. 13A is an explanatory view in a partial cross section illustrating a state in which the inner ring 26 gripped by the gripping unit 16 is transferred to a measurement position. FIG. 13B is a schematic side view of FIG. 13A from the V direction. In this case, the specified measurement position for disposing the inner ring 26 is, in terms of a width direction of the inner ring 26, a position at which a vertical line L_{ct4} passing through upper vertices (uppermost points) of spherical surfaces of the probes 42A and 42B aligns with a midpoint P_{ct} in a width direction of the raceway groove 26d of the inner ring 26 as illustrated in FIG. 13A. Also, in terms of a horizontal direction as viewed from an axial direction of the inner ring 26, as illustrated in FIG. 13B, a position at which the above-described vertical line L_{ct3} passes through a midpoint in a horizontal direction in a side view of the inner ring 26 is the specified measurement position. In one example, a positional accuracy for positioning the inner ring 26 at the measurement position is preferably such that an amount of deviation of the vertical line L_{ct4} from the groove bottom in the width direction is 0.1 mm or less. On the other hand, a positional accuracy in the horizontal direction as viewed from the axial direction may be lower than the positional accuracy in the width direction. The numerical value described above is merely an example, and the present invention is not limited thereto.

Next, a positioning drive unit 55 (FIG. 1) drives a transfer unit 19 to move the inner ring 26 vertically downward while continuing to grip the inner ring 26 with the gripping unit 16 so that the raceway groove 26d is brought into contact with the probes 42A and 42B.

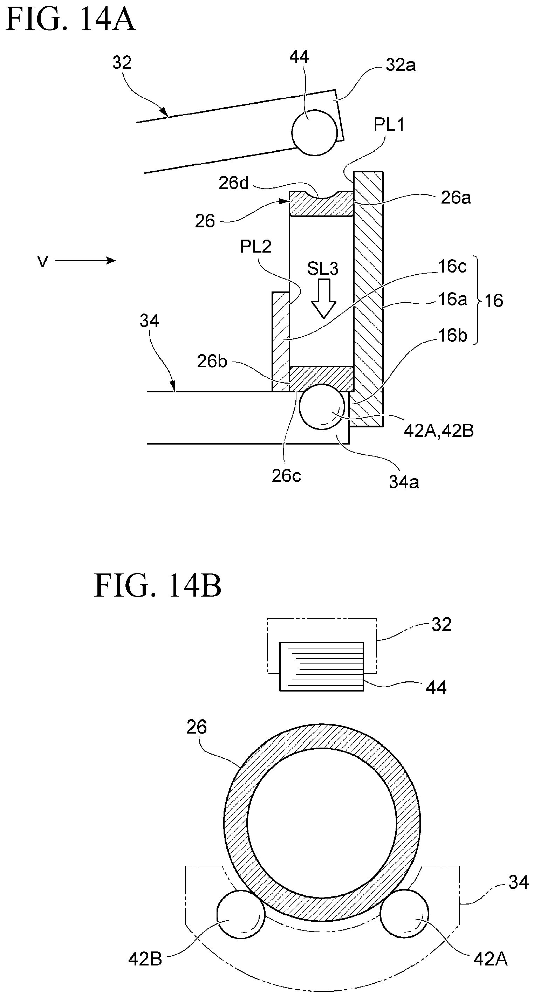

FIG. 14A is an explanatory view in a partial cross section illustrating a state in which the raceway groove 26d of the inner ring 26 is in contact with the probes 42A and 42B. FIG. 14B is a schematic side view of FIG. 14A from the V direction. As illustrated in FIGS. 14A and 14B, while the inner ring 26 is gripped by the gripping unit 16, the raceway groove 26d is supported by the probes 42A and 42B (S4). Such a motion (arrow SL3) can be realized with high accuracy by using a servo motor as a drive source of the transfer unit 19.

Next, a tilting drive unit 57 (FIG. 1) drives the rotation support portion 35 to tilt the upper arm 32 clockwise with the rotation support portion 35 as a center and bring the movable probe 44 into contact with the raceway groove 26d of the inner ring 26 (S5).

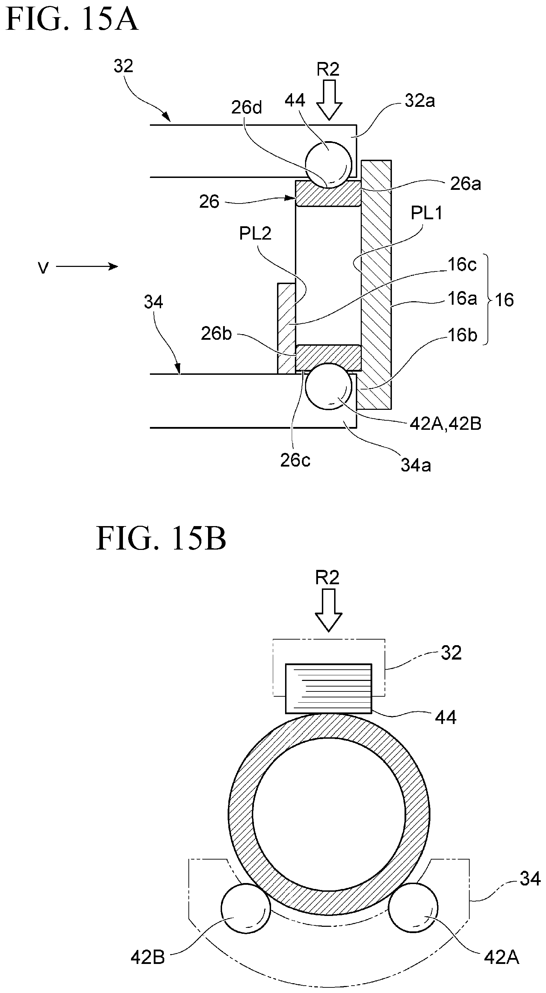

FIG. 15A is a schematic cross-sectional view illustrating a state in which the movable probe 44 is in contact with the raceway groove 26d of the inner ring 26. FIG. 15B is a schematic side view of FIG. 15A from the direction of arrow V. As illustrated in FIGS. 15A and 15B, when the movable probe 44 comes into contact with the raceway groove 26d of the inner ring 26, the inner ring 26 is supported at three points by the pair of probes 42A and 42B and the movable probe 44, and therefore a posture thereof is stabilized. The movable probe 44 comes into contact with a groove bottom surface of the inner ring 26 at an uppermost portion of the raceway groove 26d.

In this state, a gripping drive unit 53 (FIG. 1) causes the gripping unit 16 to release the grip of the inner ring 26.

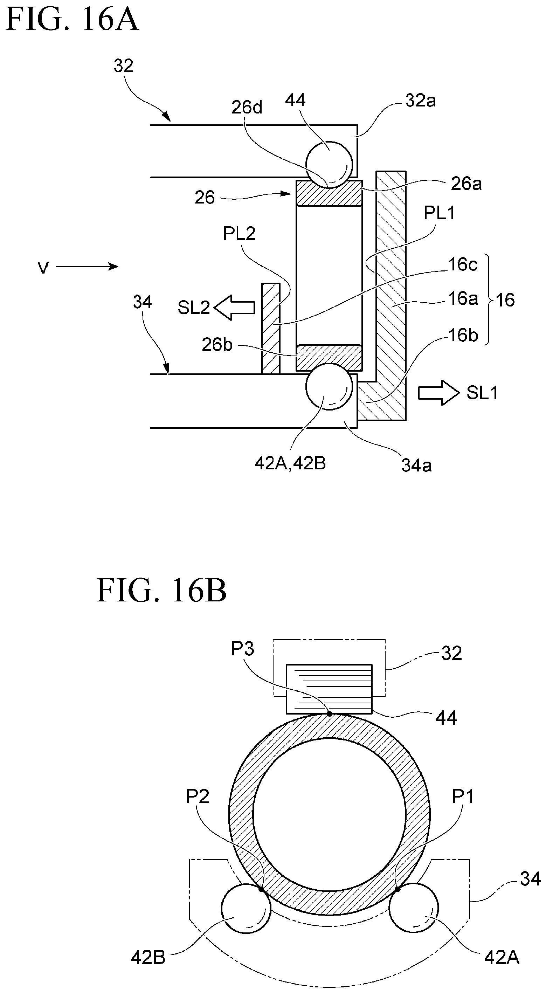

FIG. 16A is a schematic cross-sectional view illustrating a state in which the grip of the inner ring 26 by the gripping unit 16 is released. FIG. 16B is a schematic side view of FIG. 16A from the direction of arrow V. Even if the grip is released, since the inner ring 26 is supported by the pair of probes 42A and 42B and the movable probe 44, a posture thereof does not collapse.

Next, a position signal detection unit 59 (FIG. 1) detects a height of the another end part 32b of the upper arm 32 from a detection signal output from the position sensor 23 illustrated in FIG. 9. The height information is input to a calculation unit 61, and the calculation unit 61 converts the input information into information on the height position at which the movable probe 44 and the raceway groove 26d come into contact based on a positional relationship between a contact point between the position sensor 23, whose position is known, and the another end part 32b of the upper arm 32, a contact point between the movable probe 44 at one end part 32a of the upper arm 32 and the raceway groove 26d, and a rotation center of the rotation support portion 35 (S6). Further, detection of the height position in this case can also be simplified, and may be performed by determining a difference from a predetermined reference height.

Then, the calculation unit 61 calculates the groove diameter of the raceway groove 26d of the inner ring 26 from height information at contact points P1 and P2 of the pair of probes 42A and 42B disposed at the specified positions with the raceway groove 26d, and height information at a contact point P3 between the movable probe 44 and the raceway groove 26d determined by the calculation from the detection signal of the position sensor 23. Then, the calculation unit 61 outputs information on the calculated groove diameter (S7). Further, as will be described in detail later, the calculation unit 61 may simply determine the groove diameter by a proportional calculation that compares the measured position information with a predetermined reference value.

In the groove diameter measuring method described above, similarly to the case of measuring the groove diameter of the outer ring according to the first configuration example, groove diameter measurement of the inner ring can be performed with high accuracy. Particularly, since the inner ring has a smaller diameter than the outer ring, when it is supported in contact with the probes 42A and 42B, an upright posture thereof tends to easily collapse. In that regard, in the procedure of the present method, since the grip of the inner ring 26 by the gripping unit 16 is released after the inner ring 26 is supported by the probes 42A and 42B and the movable probe 44, the inner ring 26 can always be maintained stably in the upright state.

Also, in the groove diameter measuring method described above, an absolute value of the groove diameter is calculated in each case, but the measuring method is not limited thereto and a simplified measurement may also be used. Specifically, dummy races may be prepared in advance as upper and lower limits of the groove diameter dimension, and groove diameter measurement results of these dummy races may be compared with groove diameter measurement results of an actual bearing race to determine whether the actual bearing race is satisfactory or poor. Also, the groove diameter may also be determined by comparing with a measurement result of a race having a known groove diameter.

For example, it is assumed that, when a race A having a groove diameter of 0 µm is measured, a measured value by the position sensor is 1000 µm, and when a race B having a groove diameter of 100 µm is measured, a measured value by the position sensor is 1200 µm. Then, it can be seen that, when a race C to be measured is measured and if the measurement value by the position sensor is 1100 µm, the groove diameter of the race C is 50 µm by a proportional calculation. The above-described numerical values are merely examples and are not limited thereto. Further, if the above-described groove diameter is determined as a difference from a nominal value, when the present groove diameter measuring method is applied to a production line or the like, management of the groove diameter can be performed more easily. Also, in a case of simplified measurements such as those described above, various dimensional values prepared in advance for calculating the groove diameter are either unnecessary or may not necessarily have to be accurate, thereby reducing the number of measurement steps and contributing to shortening a tact time.

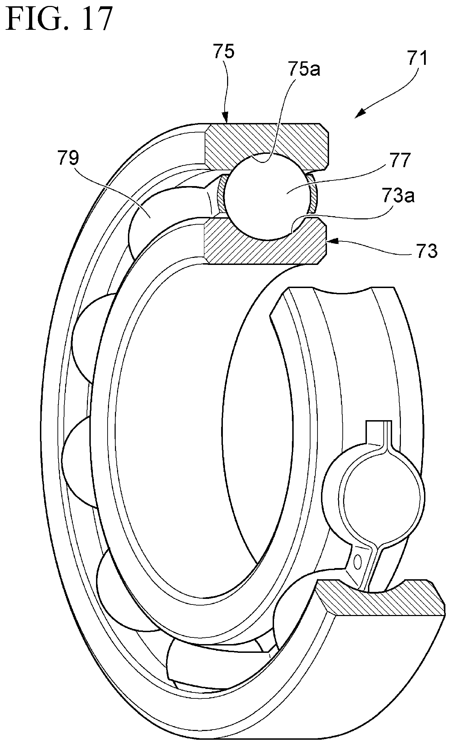

The above-described bearing race groove diameter measuring method can be suitably applied to a manufacturing process of rolling bearings. FIG. 17 is a partial cross-sectional perspective view of a rolling bearing 71. The rolling bearing 71 includes an inner ring 73 which is the bearing race described above, an outer ring 75 which is also the bearing race described above, a plurality of rolling elements (balls) 77 provided between the inner ring 73 and the outer ring 75, and a cage 79 which holds the rolling elements 77 to allow them to roll freely. The inner ring 73 is an annular body made of a metal such as steel having a raceway groove 73a for guiding the rolling elements 77 on an outer circumferential surface thereof. The outer ring 75 is an annular body made of a metal such as steel having a raceway groove 75a for guiding the rolling elements 77 on an inner circumferential surface thereof.

When the inner ring 73 and outer ring 75 of the above-described rolling bearing 71 are combined, by measuring the groove diameters of the inner ring 73 and outer ring 75, a combination that provides a desired radial clearance can be selected based on groove diameter dimensions of the inner ring 73 and the outer ring 75 and a diameter dimension of the rolling element 77. That is, the more precisely the groove diameter dimension can be measured, the more precisely the radial clearance can be set, allowing for production of the high-quality rolling bearing 71.

Also, the above-described manufacturing method for rolling bearings can also be applied to manufacture of various machines (including those with manually powered ones such as instruments) that incorporate rolling bearings. For example, the present invention can be applied to linear motion devices such as linear guide devices such as rails and sliders, ball screw devices and screw devices such as screw shafts and nuts, devices that combine linear guide bearings and ball screws, and actuators such as XY tables. Also, the present invention can also be applied to rolling bearings used in rotating portions of steering devices such as steering columns, universal joints, intermediate gears, rack and pinions, electric power steering devices, worm reducers, and torque sensors. Then, the present invention can be widely applied to the above-described machines, vehicles including steering devices, machine tools, household equipment, and the like. According to machines, vehicles, and the like obtained through this method, a higher-quality configuration can be achieved at a lower cost compared to conventional methods.

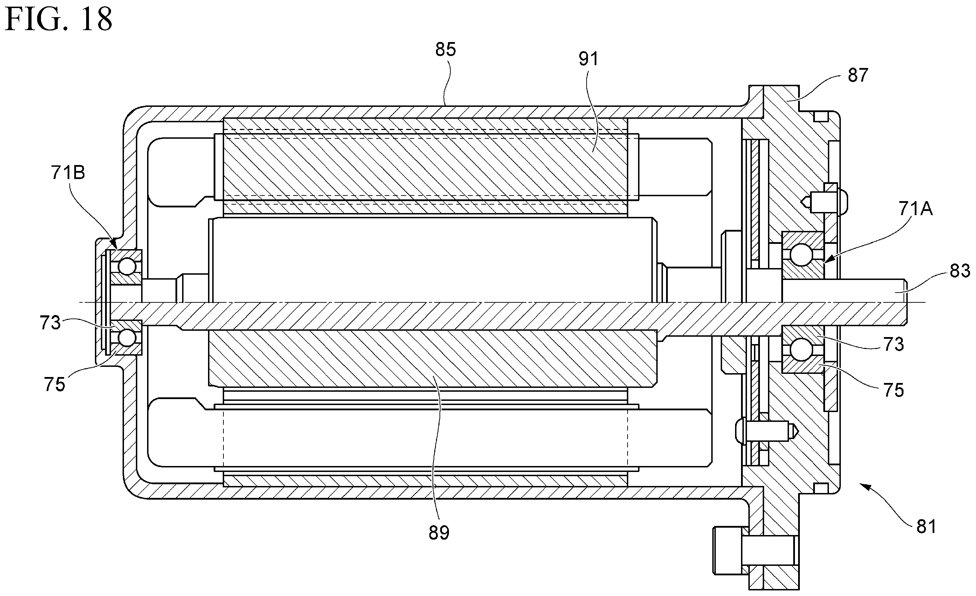

Further, the rolling bearing obtained by the above-described manufacturing method for a rolling bearing can also be applied as a rolling bearing that supports a rotating shaft of a motor. FIG. 18 is a schematic cross-sectional view of a motor 81 in which a rotating shaft 83 is supported by rolling bearings 71A and 71B. The motor 81 is a brushless motor, and has a cylindrical center housing 85 and a substantially disc-shaped front housing 87 that closes one opening end portion of the center housing 85. A rotatable rotating shaft 83 is supported inside the center housing 85 along an axis thereof via the rolling bearings 71A and 71B disposed inside the front housing 87 and the center housing 85. A rotor 89 for driving the motor is provided around the rotating shaft 83, and a stator 91 is fixed to an inner circumferential surface of the center housing 85. The motor 81 with the configuration described above is generally mounted on a machine or a vehicle, and rotationally drives the rotating shaft 83 supported by the rolling bearings 71A and 71B.

The above-described example is merely one example, and as an application example of the bearing, the bearing of the present configuration can be suitably applied to any location with relative rotation, which can lead to improved product quality.

In the above-described example, the fixed-side probes are provided at two specified circumferential positions, but the present invention is not limited to such a pair of line-symmetrical positions, and may also take a form in which the race is supported at one point.

### REFERENCE SIGNS LIST

11 Measuring unit
13 Control unit
15, 16 Gripping unit
15a, 16a First support portion
15b, 16b Abutment portion
15c, 16c Second support portion
17 Turning unit
17a Turning table
19 Transfer unit
21, 21A Operation mechanism
23 Position sensor (sensor)
25, 26 Bearing race
25a, 25b, 26a, 26b End surface
25c, 26c Outer circumferential surface
25d, 26d Raceway groove
27 Conveyance path
31, 32 Upper arm (support member)
31a, 32a One end part
31b, 32b Another end part
33, 34 Lower arm (support member)
33a, 34a One end part
33b, 34b Another end part
35 Rotation support portion
37 Support base
41A, 41B, 42A, 42B Probe
43, 44 Movable probe
51 Turning drive unit
53 Gripping drive unit
55 Positioning drive unit
57 Tilting drive unit
59 Position signal detection unit
61 Calculation unit
71, 71A, 71B Rolling bearing
73 Inner ring (bearing race)
75 Outer ring (bearing race)
77 Rolling element
79 Cage
81 Motor
83 Rotating shaft
85 Center housing
87 Front housing
89 Rotor
91 Stator
100 Groove diameter measuring device
Ax Axial direction
PL1, PL2 Flat surface

## Claims

1. A bearing groove diameter measuring method comprising:
preparing a ring-shaped member (25, 26) having a raceway groove (25d, 26d) formed on an inner circumferential surface or an outer circumferential surface;
supporting the ring-shaped member (25, 26) using a support member (31, 34), where a central axis of the ring-shaped member (25, 26) is disposed horizontally and the support member comes into contact with a groove bottom surface of the raceway groove (25d, 26d) to support the ring-shaped member (25, 26);
measuring a height position of a movable probe (43, 44) in a state in which the movable probe (43, 44) is placed on the groove bottom surface; and
calculating a groove diameter of the raceway groove (25d, 26d) based on a measurement result of the height position of the movable probe (43, 44), **characterized in that**
the measurement of the height position comprises:
preparing an arm (33, 32) having a first portion, a second portion, and an intermediate portion, the movable probe (43, 44) being provided at the first portion, the intermediate portion being disposed between the first portion and the second portion in a longitudinal direction of the arm (33, 32), a rotation center position of the intermediate portion being rotatably supported by a rotation support portion so as to allow the arm (33, 32) to perform a tilting motion; and
obtaining the height position of the movable probe (43, 44) based on a result of detecting the height position of the second portion of the arm (33, 32) with a sensor (23).

2. The measuring method according to claim 1, wherein
the support member (31, 34) has two convex portions disposed apart from each other in a horizontal direction, and
the two convex portions each have an upwardly convex contour.

3. The measuring method according to claim 1 or 2, wherein
the ring-shaped member (25) is an outer ring having the raceway groove (25d) formed on an inner circumferential surface, and
the movable probe (43) comes into contact with the groove bottom surface at a lowermost portion of the raceway groove (25d).

4. The measuring method according to claim 1 or 2, wherein
the ring-shaped member (26) is an inner ring having the raceway groove (26d) formed on an outer circumferential surface, and
the movable probe (44) comes into contact with the groove bottom surface at an uppermost portion of the raceway groove (26d).

5. A manufacturing method for a rolling bearing using the measuring method according to any one of claims 1 to 4.

6. A manufacturing method for a machine using the manufacturing method for a rolling bearing according to claim 5.

7. A manufacturing method for a vehicle using the manufacturing method for a rolling bearing according to claim 5.

8. A bearing groove diameter measuring device comprising:
a support member (31, 34) that supports a ring-shaped member (25, 26) having a raceway groove (25d, 26d) formed on an inner circumferential surface or an outer circumferential surface, and coming into contact with a groove bottom surface of the raceway groove (25d, 26d) to support the ring-shaped member (25, 26) while a central axis of the ring-shaped member (25, 26) is disposed horizontally;
a movable probe (43, 44) that is disposed to be movable and placed on the groove bottom surface of the ring-shaped member (25, 26) supported by the support member (31, 34);
an arm (33, 32) having a first portion, a second portion, and an intermediate portion, the movable probe (43, 44) being provided at the first portion, the intermediate portion being disposed between the first portion and the second portion in a longitudinal direction of the arm (33, 32), a rotation center position of the intermediate portion being rotatably supported by a rotation support portion so as to allow the arm (33, 32) to perform a tilting motion;
a sensor (23) that measures a height position of the second portion of the arm (33, 32) in a state in which the movable probe (43, 44) is placed on the groove bottom surface; and
a calculation unit (13) that calculates a groove diameter of the raceway groove (25d, 26d) based on a measurement result of the height position.

9. The measuring device according to claim 8, wherein
the support member (31, 34) has two convex portions disposed apart from each other in a horizontal direction, and
the two convex portions each have an upwardly convex contour.

10. The measuring device according to claim 8 or 9, wherein
the ring-shaped member (25) is an outer ring having the raceway groove (25d) formed on an inner circumferential surface, and
the movable probe (43) comes into contact with the groove bottom surface at a lowermost portion of the raceway groove (25d).

11. The measuring device according to claim 8 or 9, wherein
the ring-shaped member (26) is an inner ring having the raceway groove (26d) formed on an outer circumferential surface, and
the movable probe (44) comes into contact with the groove bottom surface at an uppermost portion of the raceway groove (26d).

## Patentansprüche

1. Verfahren zum Messen des Durchmessers einer Lagernut, das umfasst:
Fertigen eines ringförmigen Elementes (25, 26), das eine Laufbahn-Nut (25d, 26d) aufweist, die an einer Innenumfangsfläche oder einer Außenumfangsfläche ausgebildet ist;
Lagern des ringförmigen Elementes (25, 26) unter Verwendung eines Lagerungselementes (31, 34), wobei eine Mittelachse des ringförmigen Elementes (25, 26) horizontal angeordnet ist und das Lagerungselement mit einer Nut-Bodenfläche der Laufbahn-Nut (25d, 26d) in Kontakt kommt, um das ringförmige Element (25, 26) zu lagern;
Messen einer Höhenposition einer beweglichen Sonde (43, 44) in einem Zustand, in dem die bewegliche Sonde (43, 44) auf die Nut-Bodenfläche aufgesetzt ist; sowie
Berechnen eines Nutdurchmessers der Laufbahn-Nut (25d, 26d) auf Basis eines Ergebnisses von Messung der Höhenposition der beweglichen Sonde (43, 44),
**dadurch gekennzeichnet, dass**
die Messung der Höhenposition umfasst:
Fertigen eines Arms (33, 32), der einen ersten Abschnitt, einen zweiten Abschnitt sowie einen Zwischenabschnitt aufweist, wobei sich die bewegliche Sonde (43, 44) an dem ersten Abschnitt befindet, der Zwischenabschnitt zwischen dem ersten Abschnitt und dem zweiten Abschnitt in einer Längsrichtung des Arms (33, 32) angeordnet ist, eine Drehmittelpunkt-Position des Zwischenabschnitts über einen Drehlagerungs-Abschnitt drehbar so gelagert ist, dass zugelassen wird, dass der Arm (33, 32) eine Neigebewegung durchführt; und
Ermitteln der Höhenposition der beweglichen Sonde (43, 44) auf Basis eines Ergebnisses von Erfassung der Höhenposition des zweiten Abschnitts des Arms (33, 32) mit einem Sensor (23).

2. Messverfahren nach Anspruch 1, wobei
das Lagerungselement (31, 34) zwei konvexe Abschnitte aufweist, die in einer horizontalen Richtung voneinander getrennt angeordnet sind, und
die zwei konvexen Abschnitte jeweils eine nach oben konvexe Kontur haben.

3. Messverfahren nach Anspruch 1 oder 2, wobei
das ringförmige Element (25) ein Außenring ist, der die an einer Innenumfangsfläche ausgebildete Laufbahn-Nut (25d) aufweist, und
die bewegliche Sonde (43) mit der Nut-Bodenfläche an einem untersten Abschnitt der Laufbahn-Nut (25d) in Kontakt kommt.

4. Messverfahren nach Anspruch 1 oder 2, wobei
das ringförmige Element (26) ein Innenring ist, der die an einer Außenumfangsfläche ausgebildete Laufbahn-Nut (26d) aufweist, und
die bewegliche Sonde (44) mit der Nut-Bodenfläche an einem obersten Abschnitt der Laufbahn-Nut (26d) in Kontakt kommt.

5. Herstellungsverfahren für ein Wälzlager , bei dem das Messverfahren nach einem der Ansprüche 1 bis 4 zum Einsatz kommt.

6. Herstellungsverfahren für eine Maschine, bei dem das Herstellungsverfahren für ein Wälzlager nach Anspruch 5 zum Einsatz kommt.

7. Herstellungsverfahren für ein Fahrzeug, bei dem das Herstellungsverfahren für ein Wälzlager nach Anspruch 5 zum Einsatz kommt.

8. Vorrichtung zum Messen des Durchmessers einer Lagernut, die umfasst:
ein Lagerungselement (31, 34), das ein ringförmiges Element (25, 26) lagert, das eine an einer Innenumfangsfläche oder einer Außenumfangsfläche ausgebildete Laufbahn-Nut (25d, 26d) aufweist, und in Kontakt mit einer Nut-Bodenfläche der Laufbahn-Nut (25d, 26d) kommt, um das ringförmige Element (25, 26) zu lagern, wobei eine Mittelachse des ringförmigen Elementes (25, 26) horizontal angeordnet ist;
eine bewegliche Sonde (43, 44), die so angeordnet ist, dass sie bewegt werden kann, und auf die Nut-Bodenfläche des über das Lagerungselement (31, 34) gelagerten ringförmigen Elementes (25, 26) aufgesetzt wird;
einen Arm (33, 32), der einen ersten Abschnitt, einen zweiten Abschnitt sowie einen Zwischenabschnitt aufweist, wobei sich die bewegliche Sonde (43, 44) an dem ersten Abschnitt befindet, der Zwischenabschnitt zwischen dem ersten Abschnitt und dem zweiten Abschnitt in einer Längsrichtung des Arms (33, 32) angeordnet ist, eine Drehmittelpunkt-Position des Zwischenabschnitts über einen Drehlagerungs-Abschnitt drehbar so gelagert ist, dass zugelassen wird, dass der Arm (33, 32) eine Neigebewegung durchführt;
einen Sensor (23), der eine Höhenposition des zweiten Abschnitts des Arms (33, 32) in einem Zustand misst, in dem die bewegliche Sonde (43, 44) auf die Nut-Bodenfläche aufgesetzt ist; sowie
eine Berechnungs-Einheit (13), die einen Nutdurchmesser der Laufbahn-Nut (25d, 26d) auf Basis eines Ergebnisses von Messung der Höhenposition berechnet.

9. Messvorrichtung nach Anspruch 8, wobei
das Lagerungselement (31, 34) zwei konvexe Abschnitte aufweist, die in einer horizontalen Richtung voneinander getrennt angeordnet sind, und
die zwei konvexen Abschnitte jeweils eine nach oben konvexe Kontur haben.

10. Messvorrichtung nach Anspruch 8 oder 9, wobei
das ringförmige Element (25) ein Außenring ist, der die an einer Innenumfangsfläche ausgebildete Laufbahn-Nut (25d) aufweist, und
die bewegliche Sonde (43) mit der Nut-Bodenfläche an einem untersten Abschnitt der Laufbahn-Nut (25d) in Kontakt kommt.

11. Messvorrichtung nach Anspruch 8 oder 9, wobei
das ringförmige Element (26) ein Innenring ist, der die an einer Außenumfangsfläche ausgebildete Laufbahn-Nut (26d) aufweist, und
die bewegliche Sonde (44) mit der Nut-Bodenfläche an einem obersten Abschnitt der Laufbahn-Nut (26d) in Kontakt kommt.

## Revendications

1. Procédé de mesure du diamètre d'une gorge de roulement, comprenant :
la préparation d'un élément annulaire (25, 26) comportant une gorge de chemin de roulement (25d, 26d) formée sur une surface circonférentielle interne ou une surface circonférentielle externe ;
le support de l'élément annulaire (25, 26) en utilisant un élément de support (31, 34), où un axe central de l'élément annulaire (25, 26) est disposé horizontalement et l'élément de support entre en contact avec une surface de fond de gorge de la gorge de chemin de roulement (25d, 26d) pour supporter l'élément annulaire (25, 26) ;
la mesure de la position en hauteur d'une sonde mobile (43, 44) dans un état où la sonde mobile (43, 44) est placée sur la surface de fond de gorge ; et
le calcul du diamètre de gorge de la gorge de chemin de roulement (25d, 26d) sur la base d'un résultat de mesure de la position en hauteur de la sonde mobile (43, 44),
**caractérisé en ce que**
la mesure de la position en hauteur comprend :
la préparation d'un bras (33, 32) comportant une première portion, une deuxième portion et une portion intermédiaire, la sonde mobile (43, 44) étant pourvue dans la première portion, la portion intermédiaire étant disposée entre la première portion et la deuxième portion en direction longitudinale du bras (33, 32), la position du centre de rotation de la portion intermédiaire étant supportée de manière rotative par une portion de support de rotation afin de permettre au bras (33, 32) d'effectuer un mouvement de basculement ; et
l'obtention de la position en hauteur de la sonde mobile (43, 44) sur la base d'un résultat de détection de la position en hauteur de la deuxième portion du bras (33, 32) avec un capteur (23).

2. Procédé de mesure selon la revendication 1, dans lequel
l'élément de support (31, 34) comporte deux portions convexes espacées l'une de l'autre en direction horizontale, et
les deux portions convexes présentent chacune un contour convexe vers le haut.

3. Procédé de mesure selon la revendication 1 ou 2, dans lequel
l'élément annulaire (25) est un anneau externe comportant la gorge de chemin de roulement (25d) formée sur une surface circonférentielle interne, et
la sonde mobile (43) entre en contact avec la surface de fond de gorge dans la portion la plus basse de la gorge de chemin de roulement (25d).

4. Procédé de mesure selon la revendication 1 ou 2, dans lequel
l'élément annulaire (26) est un anneau interne comportant la gorge de chemin de roulement (26d) formée sur une surface circonférentielle externe, et
la sonde mobile (44) entre en contact avec la surface de fond de gorge dans la portion la plus haute de la gorge de chemin de roulement (26d).

5. Procédé de fabrication d'un roulement utilisant le procédé de mesure selon l'une quelconque des revendications 1 à 4.

6. Procédé de fabrication d'une machine utilisant le procédé de fabrication d'un roulement selon la revendication 5.

7. Procédé de fabrication d'un véhicule utilisant le procédé de fabrication d'un roulement selon la revendication 5.

8. Dispositif de mesure du diamètre d'une gorge de roulement, comprenant :
un élément de support (31, 34) qui supporte un élément annulaire (25, 26) comportant une gorge de chemin de roulement (25d, 26d) formée sur une surface circonférentielle interne ou une surface circonférentielle externe, et entrant en contact avec une surface de fond de gorge de la gorge de chemin de roulement (25d, 26d) pour supporter l'élément annulaire (25, 26) tandis qu'un axe central de l'élément annulaire (25, 26) est disposé horizontalement ;
une sonde mobile (43, 44) qui est disposée pour être mobile et placée sur la surface de fond de gorge de l'élément annulaire (25, 26) supporté par l'élément de support (31, 34) ;
un bras (33, 32) comportant une première portion, une deuxième portion et une portion intermédiaire, la sonde mobile (43, 44) étant pourvue dans la première portion, la portion intermédiaire étant disposée entre la première portion et la deuxième portion en direction longitudinale du bras (33, 32), la position du centre de rotation de la portion intermédiaire étant supportée de manière rotative par une portion de support de rotation afin de permettre au bras (33, 32) d'effectuer un mouvement de basculement ;
un capteur (23) qui mesure la position en hauteur de la deuxième portion du bras (33, 32) dans un état où la sonde mobile (43, 44) est placée sur la surface de fond de gorge ; et
une unité de calcul (13) qui calcule le diamètre de gorge de la gorge de chemin de roulement (25d, 26d) sur la base d'un résultat de mesure de la position en hauteur.

9. Dispositif de mesure selon la revendication 8, dans lequel
l'élément de support (31, 34) comporte deux portions convexes espacées l'une de l'autre en direction horizontale, et
les deux portions convexes présentent chacune un contour convexe vers le haut.

10. Dispositif de mesure selon la revendication 8 ou 9, dans lequel
l'élément annulaire (25) est un anneau externe comportant la gorge de chemin de roulement (25d) formée sur une surface circonférentielle interne, et
la sonde mobile (43) entre en contact avec la surface de fond de gorge dans la portion la plus basse de la gorge de chemin de roulement (25d).

11. Dispositif de mesure selon la revendication 8 ou 9, dans lequel
l'élément annulaire (26) est un anneau interne comportant la gorge de chemin de roulement (26d) formée sur une surface circonférentielle externe, et
la sonde mobile (44) entre en contact avec la surface de fond de gorge dans la portion la plus haute de la gorge de chemin de roulement (26d).
